(19)

Europäisches
Patentamt
European
Patent Office
Office européen
des brevets

(11) **EP 1 965 238 A1**

(12) **EUROPEAN PATENT APPLICATION**

(43) Date of publication:
**03.09.2008 Bulletin 2008/36**

(51) Int Cl.:
***G02B 9/12*** (2006.01)　　　***G02B 13/02*** (2006.01)

(21) Application number: **08151966.2**

(22) Date of filing: **26.02.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK**

(30) Priority: **27.02.2007 JP 2007047094**

(71) Applicant: **Enplas Corporation
Kawaguchi-shi,
Saitama-ken 332-0034 (JP)**

(72) Inventor: **Saito, Tomohiro
Kawaguchi-shi
Saitama 332-0034 (JP)**

(74) Representative: **McIlroy, Steven David
Murgitroyd & Company
Scotland House
165-169 Scotland Street
Glasgow G5 8PL (GB)**

(54) **Imaging lens and imaging device including the imaging lens**

(57)　It is to provide an imaging lens and an imaging device including the imaging lens that can maintain optical performance and achieve size and weight reduction.

The imaging lens comprises, in order from an object side to an image surface side, a first lens 2 that is a meniscus lens having a positive power whose convex surface faces the object side, a diaphragm 3, a second lens 4 that is a meniscus lens having a positive power whose convex surface faces the image surface side, and a third lens 5 that is a biconcave lens having a negative power, wherein a condition expressed by $0.3 \leq f_1/f_2 \leq 0.86$ (where, $f_1$: focal distance of the first lens and $f_2$: focal distance of the second lens) are to be satisfied.

Fig.1

EP 1 965 238 A1

**Description**

BACKGROUND OF THE INVENTION

1. Field of the Invention

The present invention relates to an imaging lens and an imaging device including the imaging lens. In particular, the present invention relates to an imaging lens and an imaging device including the imaging lens, in which the imaging lens has a three-lens structure that is capable of achieving size and weight reduction. The imaging lens is used in an image-taking device that uses an image sensor element, such as a charge-coupled device (CCD) and a complementary metal oxide semiconductor (CMOS), mounted on a portable computer, a television phone, a portable phone, a digital camera, and the like.

2. Description of the Related Art

In recent years, there has been an increasing demand for cameras that utilize an image sensor element, such as the CCD, the CMOS, or the like, that is mounted on a portable computer, a television phone, a portable phone, a digital camera, and the like. It is demanded that a camera such as this is small and light because the camera is required to be mounted on a limited installation space.

Therefore, it is also necessary for the imaging lens used in such cameras to be similarly small and light. Conventionally, a single-lens structure lens system using a single lens and a two-lens structure lens system using two lenses have been used as such an imaging lens.

However, although such lens systems are extremely effective in reducing the size and weight of the lens system, the lens systems cannot sufficiently handle high image quality and high resolution required of the imaging lenses in recent years.

Therefore, conventionally, a three-lens structure lens system using three lenses is used to handle high image quality and high resolution.

As such three-lens structure lens systems aiming to achieve high image quality and high resolution, for example, lens systems described in the following Patent Literatures 1 to 4 are known.

[Patent Literature 1] Japanese Patent Unexamined Publication 2005-173298
[Patent Literature 2] Japanese Patent Unexamined Publication 2005-91513
[Patent Literature 3] Japanese Patent Unexamined Publication 2003-322792
[Patent Literature 4] Japanese Patent Unexamined Publication 2004-163786

However, in the lens system described in Patent Literature 1, a third lens is a negative lens whose convex surface faces an object side. Therefore, a balance between aberration correction and size reduction of the lens system is difficult to achieve. Regarding power distribution among first to third lenses and a ratio of center radius curvature of both surfaces of the first lens in the lens system described in Patent Literature 1, a back focus distance becomes too long. As a result, the overall length of the lens system becomes too long.

Regarding power distribution among first to third lenses in the lens system described in Patent Literature 2, as in the lens system described in Patent Literature 1, the back focus distance becomes too long. As a result, the overall length of the lens system becomes too long.

In the lens system described in Patent Literature 3, a third lens is a negative lens whose convex surface faces an object side. As in the lens system described in Patent Literature 1, a balance between aberration correction and size reduction of the lens system is difficult to achieve. Regarding power distribution among first to third lenses in the lens system described in Patent Literature 3, the overall length of the lens system becomes too long. Furthermore, in the lens system in Patent Literature 3, the back focus distance is short and the third lens is a meniscus lens. Therefore, a last surface is shaped such as to significantly protrude towards an image-taking surface side at the optical surface end, thereby interfering with insertion of various filters and the like.

Regarding power distribution among a first lens, a second lens, and a third lens in the lens system described in Patent Literature 4, the overall length of the lens system becomes too long.

Therefore, the conventional lens systems were insufficient for achieving further size and weight reduction (shortening of overall length and lens diameter, and the like) of the lens system itself, while maintaining excellent optical performance such as high image quality and high resolution.

## SUMMARY OF THE INVENTION

The present invention has been achieved in light of the above-described problems. An object of the invention is to provide an imaging lens and an imaging device including the imaging lens that can achieve size and weight reduction while maintaining excellent optical performance.

In order to achieve the aforementioned object, an imaging lens according to a first aspect of the present invention is an imaging lens used for forming an image of an object on an image-taking surface of an image sensor element comprising, in order from an object side to an image surface side: a first lens that is a meniscus lens having a positive power whose convex surface faces the object side, a diaphragm, a second lens that is a meniscus lens having a positive power whose convex surface faces the image surface side, and a third lens that is a bi-concave lens having a negative power, wherein a condition expressed by the following expression (1) is to be satisfied:

$$0.3 \le f_1/f_2 \le 0.86 \qquad (1)$$

where,

$f_1$: focal distance of the first lens
$f_2$: focal distance of the second lens.

In the first aspect of the invention, the first lens is a meniscus lens having a positive power whose convex surface faces the object side. The second lens is a meniscus lens having a positive power whose convex surface faces the image surface side. The third lens is a bi-concave lens having a negative power. The diaphragm is disposed between the first lens and the second lens. In addition, the condition expressed by the expression (1) is satisfied. Therefore, the size and weight of the imaging lens can be reduced while maintaining excellent optical performance.

An imaging lens according to a second aspect is the imaging lens according to the first aspect, wherein, further, a condition expressed by a following expression (2) is to be satisfied:

$$1 \le L/FL \le 1.3 \qquad (2)$$

where,

L: overall length of the lens system (distance from a surface of the first lens on the object side to the image-taking surface on an optical axis [equivalent air length])
FL: focal distance of the entire lens system.

In the second aspect of the present invention, further, the expression (2) is satisfied. Therefore, the size and weight of the imaging lens can be reduced while maintaining excellent optical performance and productivity.

Productivity, herein, means not only the productivity for mass-producing imaging lenses (such as moldability, easiness of assembly, and cost when imaging lenses are mass-produced by injection molding), but also easiness of processing, manufacture, etc. of equipment used for manufacturing the imaging lenses (such as easiness of processing a mold used for injection molding).

An imaging lens according to a third aspect is the imaging lens according to the first or second aspect, wherein, further, a condition expressed by a following expression (3) is to be satisfied:

$$0.6 \le f_1/FL \le 1.0 \qquad (3)$$

where,

FL: focal distance of the entire lens system.

In the third aspect of the invention, further, the expression (3) is satisfied. Therefore, the size and weight of the imaging lens can be further reduced, while suitably securing the required back focus distance, and productivity can be further improved.

An imaging lens according to a fourth aspect is the imaging lens according to any one of aspects 1 to 3, wherein, further, a condition expressed by a following expression (4) is to be satisfied:

$$-1.1 \leq f_1/f_3 \leq -0.1 \qquad (4)$$

where,

$f_3$: focal distance of the third lens.

In the fourth aspect of the present invention, further, the expression (4) is satisfied. Therefore, the size and weight of the imaging lens can be further reduced, while maintaining excellent optical performance with further certainty.

An imaging lens according to a fifth aspect is the imaging lens according to any one of aspects 1 to 4, wherein, further, a condition expressed by a following expression (5) is to be satisfied:

$$0.12 \leq d_2/FL \leq 0.2 \qquad (5)$$

where,

$d_2$: distance between the first lens and the second lens on the optical axis
FL: focal distance of the entire lens system.

In the fifth aspect of the present invention, further, the expression (5) is satisfied. Therefore, the size and weight of the imaging lens can be more effectively reduced, while more effectively securing the required back focus distance. Productivity can be further enhanced.

An imaging lens according to a sixth aspect is the imaging lens according to any one of aspects 1 to 5, wherein, further, a condition expressed by a following expression (6) is to be satisfied:

$$0.01 \leq d_3/FL \leq 0.2 \qquad (6)$$

where,

$d_3$: center thickness of the second lens
FL: focal distance of the entire lens system.

In the sixth aspect of the present invention, further, the expression (6) is satisfied. Therefore, the size and weight of the imaging lens can be more effectively reduced, and the productivity can be further enhanced.

An imaging lens according to a seventh aspect is the imaging lens according to any one of aspects 1 to 6, wherein, further, a condition expressed by a following expression (7) is to be satisfied:

$$0 < d_4/FL \leq 0.25 \qquad (7)$$

where,

$d_4$: distance between the second lens and the third lens on the optical axis
FL: focal distance of the entire lens system.

In the seventh aspect of the present invention, further, the expression (7) is satisfied. Therefore, size and weight can be reduced, excellent optical performance can be maintained, telecentricity can be secured, and productivity can be maintained. Moreover, as a result of the shape of the second lens, light rays from surrounding areas can be effectively used.

An imaging device according to an eighth aspect includes the imaging lens according to any one of aspects 1 to 7 and an image sensor element.

In the eighth aspect of the present invention, further, size and weight of the image device can be reduced while maintaining excellent optical performance by the imaging lens according to any one of aspects 1 to 7 being included.

[Effect of the Invention]

In the imaging lens and the imaging device including the imaging lens of the invention, size and weight reduction can be achieved while maintaining excellent optical performance.

In particular, a high-performance imaging lens that is compact and has a short optical length can be actualized.

BRIEF DESCRIPTION OF THE DRAWINGS

FIG. 1 is a schematic diagram for showing an embodiment of an imaging lens and an imaging device including the imaging lens according to the present invention;
FIG. 2 is a schematic diagram for showing a FIRST EXAMPLE of the imaging lens according to the present invention;
FIG. 3 shows graphs for describing the astigmatism and distortion of the imaging lens shown in FIG. 2;
FIG. 4 is a schematic diagram for showing a SECOND EXAMPLE of the imaging lens according to the present invention;
FIG. 5 shows graphs for describing the astigmatism and distortion of the imaging lens shown in FIG. 4;
FIG. 6 is a schematic diagram for showing a THIRD EXAMPLE of the imaging lens according to the present invention;
FIG. 7 shows graphs for describing the astigmatism and distortion of the imaging lens shown in FIG. 6;
FIG. 8 is a schematic diagram for showing a FOURTH EXAMPLE of the imaging lens according to the present invention;
FIG. 9 shows graphs for describing the astigmatism and distortion of the imaging lens shown in FIG. 8;
FIG. 10 is a schematic diagram for showing a FIFTH EXAMPLE of the imaging lens according to the present invention;
FIG. 11 shows graphs for describing the astigmatism and distortion of the imaging lens shown in FIG. 10;
FIG. 12 is a schematic diagram for showing a SIXTH EXAMPLE of the imaging lens according to the present invention; and
FIG. 13 shows graphs for describing the astigmatism and distortion of the imaging lens shown in FIG. 12.
FIG. 14 is a schematic diagram for showing a SEVENTH EXAMPLE of the imaging lens according to the present invention;
FIG. 15 shows graphs for describing the astigmatism and distortion of the imaging lens shown in FIG. 14;
FIG. 16 is a schematic diagram for showing an EIGHTH EXAMPLE of the imaging lens according to the present invention;
FIG. 17 shows graphs for describing the astigmatism and distortion of the imaging lens shown in FIG. 16;
FIG. 18 is a schematic diagram for showing a NINTH EXAMPLE of the imaging lens according to the present invention;
FIG. 19 shows graphs for describing the astigmatism and distortion of the imaging lens shown in FIG. 18;
FIG. 20 is a schematic diagram for showing a TENTH EXAMPLE of the imaging lens according to the present invention; and
FIG. 21 shows graphs for describing the astigmatism and distortion of the imaging lens shown in FIG. 20.

DETAILED DESCRIPTION OF THE PREFERRED EMBODIMENT

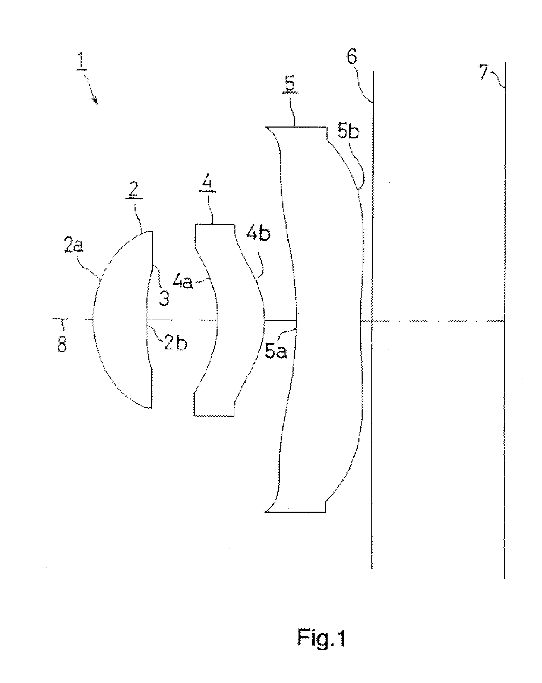

An embodiment of the imaging lens and the imaging device including the imaging lens according to the present invention will be described hereinafter with reference to FIG. 1.

As shown in FIG. 1, an imaging lens 1 according to the embodiment comprises, in order from the object side toward the image surface side, a resin-type first lens 2 that is a meniscus lens having a positive power whose convex surface faces the object side, a diaphragm 3, a resin-type second lens 4 that is a meniscus lens having a positive power whose convex surface faces the image surface side, and a resin-type third lens 5 that is a biconcave lens having a negative power. Each lens 2, lens 4, and lens 5 are formed from resin material, such as cyclo-olefin copolymers, cycle-olefin polymers, and polycarbonate, using an injection-molding method or formed using a silicon resin.

Hereafter, respective lens surfaces 2a, 4a, and 5a on the object side of the first lens 2, the second lens 4, and the third lens 5 are referred to as first face 2a, first face 4a, and first face 5a of each lens 2, lens 4, and lens 5. Respective lens surfaces 2b, 4b, and 5b on the image surface side of the first lens 2, the second lens 4, and the third lens 5 are referred to as second face 2b, second face 4b, and second face 5b of each lens 2, lens 4, and lens 5.

On the second face 5b the third lens 5, there are respectively disposed various filters 6, such as a cover glass, an infrared (IR) cut filter, and a lowpass filter, and an image-taking surface 7 that is a light-receiving surface of an image sensor element (solid image sensor element), such as a CCD or a CMOS.

The imaging device according to the embodiment is composed of such imaging lens 1, filters 6, image sensor element, a power supply and a circuit (not shown) driving the image sensor element, and a holder (not shown) housing the imaging lens 1. The filters 6 may be omitted as required.

According to the embodiment, a condition expressed by the following expression (1) is satisfied:

$$0.3 \leq f_1/f_2 \leq 0.86 \qquad (1)$$

where, $f_1$ in the expression (1) is the focal distance of the first lens 2 (the same applies hereafter). $f_2$ in the expression (1) is the focal distance of the second lens 4 (the same applies hereafter).

Here, when the shapes of each lens 2, 4, and 5 differ from the shape described earlier according to the embodiment, securing telecentricity while keeping the overall length of the optical system short and maintaining optical performance becomes difficult.

When the value of $f_1/f_2$ is greater than the value (0.86) in the expression (1), the power of the first lens 2 becomes relatively too weak. Therefore, size reduction of the optical system becomes difficult. A balance of power between the first lens 2 and the second lens 4 deteriorates, and optical performance declines.

At the same time, when the value of $f_1/f_2$ is less than the value (0.3) in the expression (1), the power of the first lens 2 becomes relatively too strong. Therefore, productivity declines. Furthermore, the balance of power between the first lens 2 and the second lens 4 deteriorates, and optical performance declines.

Therefore, according to the embodiment, the first lens 2 is a meniscus lens having a positive power whose convex surface faces the object side. The second lens 4 is a meniscus lens having a positive power whose convex surface faces the image surface side. The third lens 5 is a bi-concave lens having a negative power. The diaphragm 3 is disposed between the first lens 2 and the second lens 4. In addition, the value of $f_1/f_2$ satisfies the condition expressed by the expression (1). Therefore, the size and weight of the imaging lens 1 can be reduced while maintaining excellent optical performance.

The relationship between $f_1$ and $f_2$ is more preferably $0.55 < f_1/f_2 \leq 0.86$.

In addition to the above-described configuration, according to the embodiment, a condition expressed by a following expression (2) is satisfied:

$$1 \leq L/FL \leq 1.3 \qquad (2)$$

where, L in the expression (2) is the overall length of the lens system, namely the distance from the first face 2a of the first lens 2 to an image-taking surface 7 on an optical axis 8 (equivalent air length) (the same applies hereafter). FL in the expression (2) is the focal distance of the entire lens system (the same applies hereafter).

When the value of L/FL is greater than the value (1.3) in the expression (2), the overall optical system becomes too large.

At the same time, when the value of L/FL is less than the value (1) in the expression (2), the overall optical system becomes too small. Therefore, productivity declines and optical performance becomes difficult to maintain.

Therefore, according to the embodiment, by the value of L/FL being set to satisfy the expression (2), the size and weight of the imaging lens 1 can be further reduced while maintaining further excellent optical performance and productivity with certainty.

The relationship between L/FL is more preferably $1.05 \leq L/FL \leq 1.25$.

In addition to the above-described configuration, according to the embodiment, a condition expressed by a following expression (3) is satisfied:

$$0.6 \leq f_1/FL \leq 1.0 \qquad (3)$$

When the value of $f_1/FL$ is greater than the value (1.0) in the expression (3), the back focus distance becomes too long. Therefore, size reduction of the optical system becomes difficult to achieve.

At the same time, when the value of $f_1/FL$ is less than the value (0.6) in the expression (3), the power of the first lens 2 becomes too strong, and productivity declines. The required back focus distance becomes difficult to secure.

Therefore, according to the embodiment, by the value of $f_1/FL$ being set to satisfy the expression (3), the size and weight of the imaging lens 1 can be more effectively reduced, while securing the required back focus distance.

Productivity can be further enhanced.

The relationship between $f_1$ and FL is more preferably $0.75 \leq f_1/FL \leq 1.00$.

In addition to the above-described configuration, according to the embodiment, a condition expressed by a following expression (4) is satisfied:

$$-1.1 \leq f_1/f_3 \leq -0.1 \qquad (4)$$

where, $f_3$ in the expression (4) is the focal distance of the third lens 5 (the same applies hereafter).

When the value of $f_1/f_3$ is greater than the value (-0.1) in the expression (4), the power of the first lens 2 becomes too strong. Productivity declines, and power balance between the first lens 2 and the third lens 5 cannot be achieved. Optical performance cannot be maintained.

At the same time, when the value of $f_1/f_3$ is less than the value (-1.1) in the expression (4), the power of the third lens 5 becomes relatively too strong. Therefore, the size reduction of the optical system becomes difficult. The balance of power between the first lens 2 and the third lens 5 deteriorates, and the optical performance declines.

Therefore, according to the embodiment, by the value of $f_1/f_3$ being set to satisfy the expression (4), size and weight can be further reduced while maintaining excellent optical performance with further certainty.

The relationship between $f_1$ and $f_3$ is more preferably $-1.0 \leq f_1/f_3 \leq -0.4$.

In addition to the above-described configuration, according to the embodiment, a condition expressed by a following expression (5) is satisfied:

$$0.12 \leq d_2/FL \leq 0.2 \qquad (5)$$

where, $d_2$ in the expression (5) is the distance between the first lens 2 and the second lens 4 on the optical axis 8.

Here, when the value of $d_2/FL$ is greater than the value (0.2) in the expression (5), the required back focus distance becomes difficult to secure. The height of the light ray passing through the second face 5b of the third lens 5 becomes too high. Therefore, the third lens 5 increases in size and weight, and production becomes difficult.

At the same time, when the value of $d_2/FL$ is less than the value (0.12) in the expression (5), the back focus distance becomes too long. Therefore, the size reduction of the entire optical system becomes difficult. In addition, it becomes difficult to insert the diaphragm that effectively limits the amount of light.

Therefore, according to the embodiment, by the value of the $d_2/FL$ being set to satisfy the expression (5), the imaging lens 1 can be more effectively reduced in size and weight, while more effectively securing the required back focus distance, and productivity can be further improved.

The relationship between $d_2$ and FL is more preferably $0.14 \leq d_2/FL \leq 0.185$.

In addition to the above-described configuration, according to the embodiment, a condition expressed by a following expression (6) is satisfied:

$$0.01 \leq d_3/FL \leq 0.2 \qquad (6)$$

where, $d_3$ in the expression (6) is the center thickness of the second lens (the same applies hereafter).

When the value of $d_3/FL$ is greater than the value (0.2) in the expression (6), the back focus distance becomes too long. Therefore, the size reduction of the entire optical system becomes difficult. The height of the light ray passing through the second face 5b of the third lens 5 becomes too high. Therefore, the third lens 5 increases in size and weight, and production becomes difficult.

At the same time, when the value of $d_3/FL$ is less than the value (0.01) in the expression (6), the production of the second lens 4 becomes difficult.

Therefore, according to the embodiment, by the value of the $d_3/FL$ being set to satisfy the expression (6), the imaging lens 1 can be more effectively reduced in size and weight, and the productivity can be further improved.

The relationship between $d_3$ and FL is more preferably $0.1 \leq d_3/FL \leq 0.145$.

In addition to the above-described configuration, according to the embodiment, a condition expressed by a following expression (7) is satisfied:

$$0 < d_4/FL \leq 0.25 \qquad (7)$$

where, $d_3$ in the expression (7) is the distance between the second lens 4 and the third lens 5 on the optical axis 8 (the same applies hereafter).

When the value of $d_4$/FL is greater than the value (0.25) in the expression (7), the height of the light ray passing through the second face 5b of the third lens 5 becomes too high. Therefore, the third lens 5 increases in size and weight, and production becomes difficult. The required back focus distance becomes difficult to secure.

At the same time, when the value of $d_4$/FL becomes close to the value (0) in the expression (7), the back focus distance becomes too long. Size reduction of the overall optical system becomes difficult, and it becomes difficult to insert the diaphragm that effectively limits the amount of light.

Therefore, according to the embodiment, by the value of the $d_4$/FL being set to satisfy the expression (7), the imaging lens 1 can be more effectively reduced in size and weight, telecentricity can be secured, excellent optical performance can be maintained, and the productivity can be maintained. Moreover, as a result of the shape of the second lens 4, light rays from surrounding areas can be effectively used.

The relationship between $d_4$ and FL is more preferably $0.11 < d_4/FL \leq 0.25$.

EXAMPLES

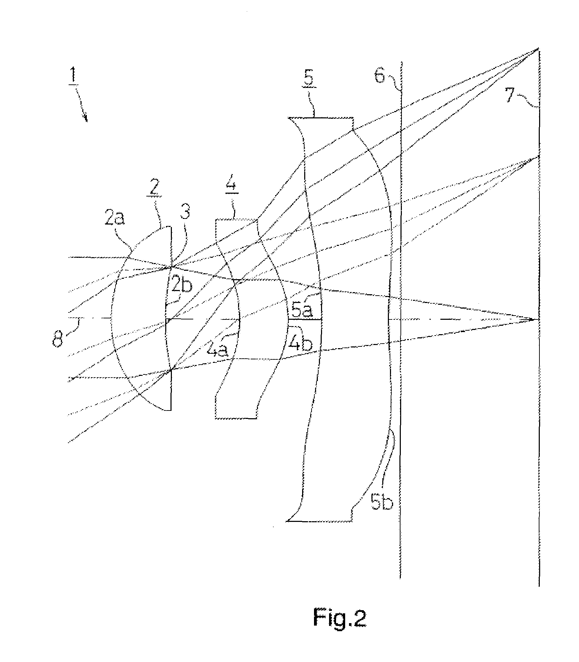

Next, EXAMPLES of the present invention will be described with reference to FIG. 2 to FIG. 21.

In the EXAMPLES, F no denotes F number, ω denotes half of the angle-of-view (angle of view of opposing angles), and r denotes the radius curvature of an optical surface (center radius curvature of a lens surface). Further, d denotes a distance to the next optical surface, nd denotes the index of refraction of the d line, and vd denotes the Abbe number (based on d line).

k, A, B, C, and D denote each coefficient in a following expression (8). Specifically, the shape of the aspherical surface of the lens is expressed by the following expression provided that the direction of the optical axis 8 is taken as the Z axis, the direction orthogonal to the optical axis 8 (height direction) as the X axis, the traveling direction of light is positive, k is the constant of cone, A, B, C, and D are the aspherical coefficients, and r is the center radius curvature.

$$Z(X) = r^{-1}X^2 / [1 + \{1 - (k+1)r^{-2}X^2\}^{1/2}]$$
$$+ AX^4 + BX^6 + CX^8 + DX^{10} \qquad (6)$$

In the following EXAMPLES, reference code E used for a numerical value denoting the constant of cone and the aspherical coefficient indicates that the numerical value following E is an exponent having 10 as the base and that the numerical value before E is multiplied by the numerical value denoted by the exponent having 10 as the base. For example, -7.57E-1 denotes $-7.57 \times 10^{-1}$.

FIRST EXAMPLE

FIG. 2 shows a FIRST EXAMPLE of the present invention. The imaging lens 1 according to the FIRST EXAMPLE shown in Fig. 2 is the same imaging lens 1 as that shown in Fig. 1. In the example, a cover glass serving as the filter 6 is disposed between the second face 5b of the third lens 5 and the image-taking surface 7.

The imaging lens 1 of the FIRST EXAMPLE was set under the following conditions:

Lens Data

F no=3.25, ω=34.58°, L=3.52mm, FL=3.22mm, $f_1$=2.90mm, $f_2$=3.90mm, $f_3$=-3.29mm

| Face Number | r | d | nd | vd |
|---|---|---|---|---|
| (Object Point) | | | | |
| 1(First Face of First Lens) | 1.00 | 0.45 | 1.5310 | 56.0 |
| 2(Second Face of First Lens) | 2.38 | 0.05 | | |
| 3(Diaphragm) | 0.00 | 0.57 | | |
| 4(First Face of Second Lens) | -1.00 | 0.40 | 1.5310 | 56.0 |
| 5(Second Face of Second Lens) | -0.77 | 0.27 | | |
| 6(First Face of Third Lens) | -3.31 | 0.55 | 1.5310 | 56.0 |
| 7(Second Face of Third Lens) | 3.95 | | | |
| (Image Surface) | | | | |

| Face Number | k | A | B | C | D |
|---|---|---|---|---|---|
| 1 | -7.57E-1 | 1.02E-1 | 4.82E-1 | -1.19 | 2.28 |
| 2 | 0.00 | 1.36E-1 | 1.00E-1 | 9.16E-1 | 0.00 |
| 4 | 9.43E-1 | 8.37E-3 | 8.39E-1 | 6.22E-1 | 0.00 |
| 5 | -4.54E-1 | 3.18E-1 | -2.18E-1 | 1.98 | -1.43 |
| 6 | 0.00 | 8.15E-3 | 1.83E-2 | 1.00E-2 | -5.27E-3 |
| 7 | -7.19E+1 | -1.03E-1 | 3.50E-2 | -1.35E-2 | 1.82E-3 |

Under such conditions, $f_1/f_2$=0.74 was achieved, thereby satisfying the expression (1). L/FL=1.09 was achieved, thereby satisfying the expression (2). $f_1$/FL=0.901 was achieved, thereby satisfying the expression (3). $f_1/f_3$=-0.88 was achieved, thereby satisfying the expression (4). $d_2$/FL=0.19 was achieved, thereby satisfying the expression (5). $d_3$/FL=0.12 was achieved, thereby satisfying the expression (6). $d_4$/FL=0.08 was achieved, thereby satisfying the expression (7).

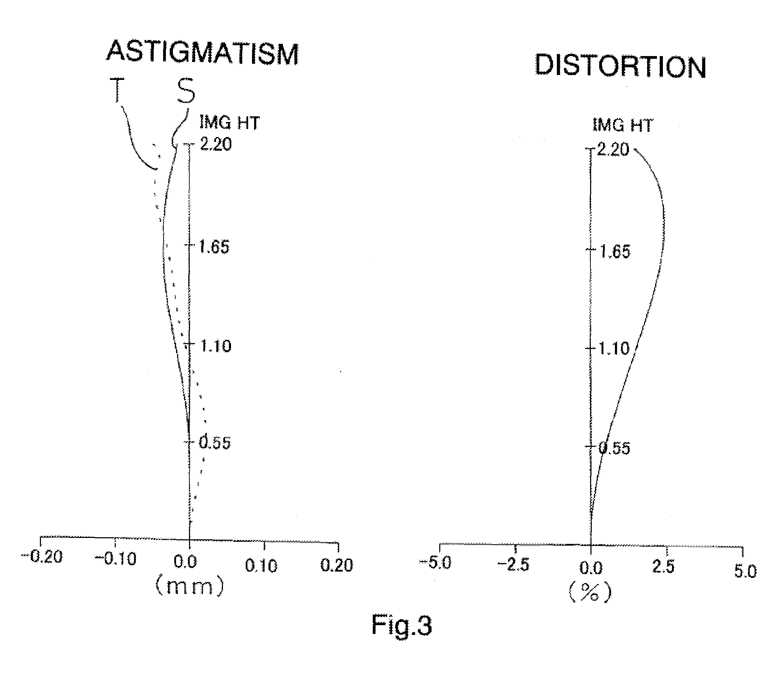

FIG. 3 shows the astigmatism and the distortion in the imaging lens 1 of the FIRST EXAMPLE.

According to the result, each of the astigmatism and the distortion was satisfied. It can be seen from the result that a sufficiently excellent optical property can be obtained.

SECOND EXAMPLE

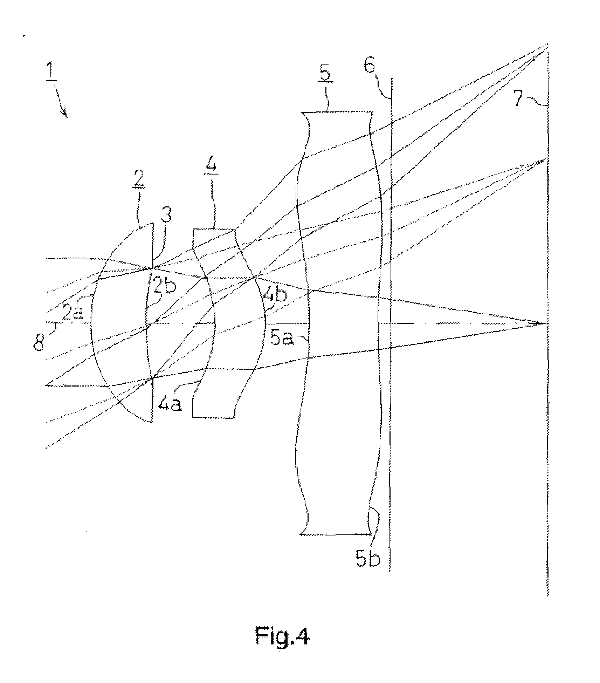

FIG. 4 shows a SECOND EXAMPLE of the present invention. In the example as well, a cover glass serving as the filter 6 is disposed between the second face 5b of the third lens 5 and the image-taking surface 7.

The imaging lens 1 of the SECOND EXAMPLE was set under the following conditions:

Lens Data

F no=3.25, $\omega$=33.38°, L=3.65mm, FL=3.34mm, $f_1$=3.08mm, $f_2$=3.90mm, $f_3$=-3.29mm

| Face Number | r | d | nd | νd |
|---|---|---|---|---|
| (Object Point) | | | | |
| 1(First Face of First Lens) | 1.05 | 0.45 | 1.5310 | 56.0 |
| 2(Second Face of First Lens) | 2.50 | 0.05 | | |
| 3(Diaphragm) | 0.00 | 0.50 | | |
| 4(First Face of Second Lens) | -1.00 | 0.40 | 1.5310 | 56.0 |
| 5 (Second Face of Second Lens) | -0.77 | 0.35 | | |
| 6(First Face of Third Lens) | -3.31 | 0.55 | 1.5310 | 56.0 |
| 7(Second Face of Third Lens) | 3.95 | 0.20 | | |
| (Image Surface) | | | | |

| Face Number | k | A | B | C | D |
|---|---|---|---|---|---|
| 1 | -8.81E-1 | 8.77E-2 | 3.70E-1 | -8.44E-1 | 1.42 |
| 2 | 0.00 | 8.44E-2 | 4.37E-2 | 6.15E-1 | 0.00 |
| 4 | 9.02E-1 | 5.95E-3 | 9.23E-1 | 9.21E-1 | 0.00 |
| 5 | -4.14E-1 | 3.04E-1 | -1.67E-1 | 2.14 | -1.43 |
| 6 | 0.00 | 3.09E-2 | 2.00E-2 | 9.07E-3 | -4.74E-3 |
| 7 | -6.92E+1 | -7.69E-2 | 3.20E-2 | -1.31E-2 | 2.85E-3 |

Under such conditions, $f_1/f_2$=0.79 was achieved, thereby satisfying the expression (1). L/FL=1.09 was achieved, thereby satisfying the expression (2). $f_1$/FL=0.92 was achieved, thereby satisfying the expression (3). $f_1/f_3$=-0.94 was achieved, thereby satisfying the expression (4). $d_2$/FL=0.17 was achieved, thereby satisfying the expression (5). $d_3$/FL=0.12 was achieved, thereby satisfying the expression (6). $d_4$/FL=0.11 was achieved, thereby satisfying the expression (7).

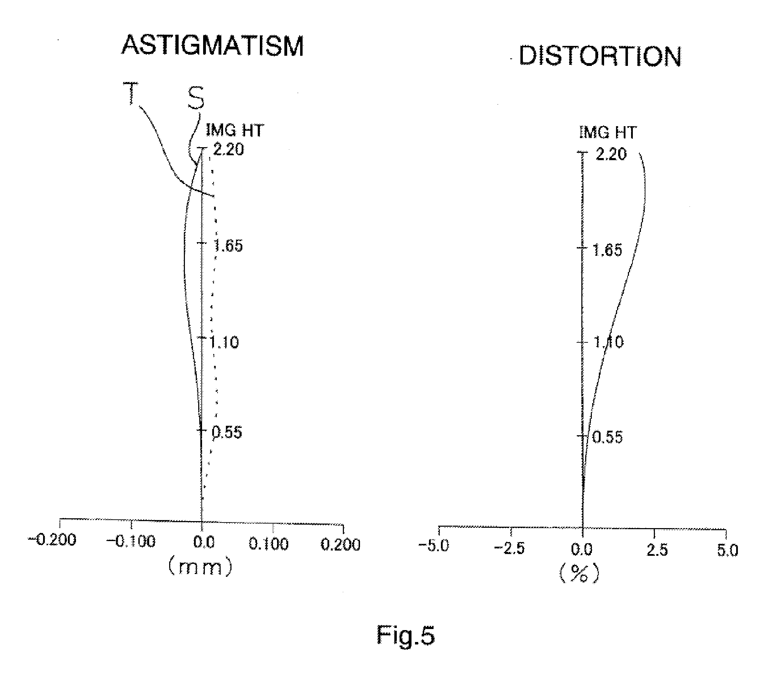

FIG. 5 shows the astigmatism and the distortion in the imaging lens 1 of the SECOND EXAMPLE.

According to the result, each of the astigmatism and the distortion was satisfied. It can be seen from the result that a sufficiently excellent optical property can be obtained.

THIRD EXAMPLE

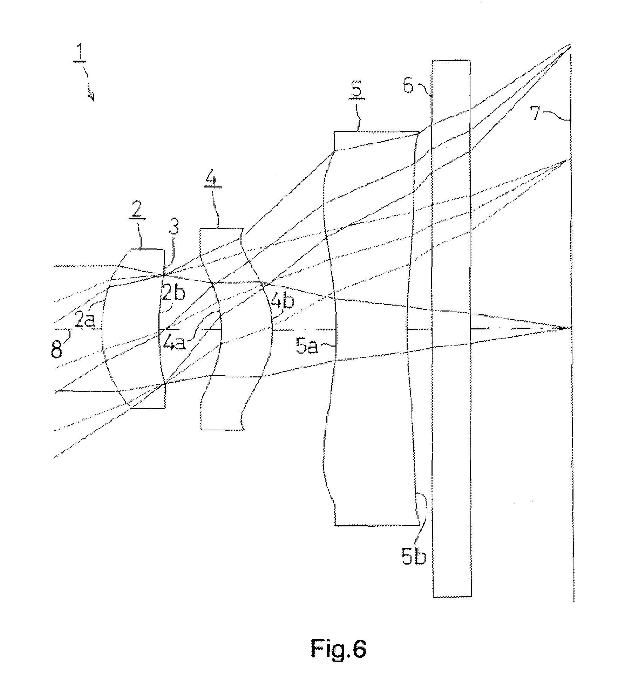

FIG. 6 shows a THIRD EXAMPLE of the present invention. In this example as well, a cover glass serving as the filter 6 is disposed between the second face 5b of the third lens 5 and the image-taking surface 7.
The imaging lens 1 of the THIRD EXAMPLE was set under the following conditions:
Lens Data
F no=3.25, $\omega$=33.70°, L=3.69mm, FL=3.27mm, $f_1$=3.16mm, $f_2$=3.77mm, $f_3$=-3.04mm

| Face Number (Object Point) | r | d | nd | νd |
|---|---|---|---|---|
| 1(First Face of First Lens) | 1.07 | 0.45 | 1.5310 | 56.0 |
| 2(Second Face of First Lens) | 2.50 | 0.05 | | |
| 3(Diaphragm) | 0.00 | 0.45 | | |
| 4(First Face of Second Lens) | -1.00 | 0.40 | 1.5310 | 56.0 |
| 5 (Second Face of Second Lens) | -0.76 | 0.50 | | |
| 6(First Face of Third Lens) | -3.08 | 0.55 | 1.5310 | 56.0 |
| 7(Second Face of Third Lens) | 3.64 | 0.10 | | |
| 8(First Face of Cover Glass) | 0.00 | 0.30 | 1.5168 | 64.2 |
| 9(Second Face of Cover Glass) (Image Surface) | 0.00 | | | |

| Face Number | k | A | B | C | D |
|---|---|---|---|---|---|
| 1 | -4.70E-1 | 4.99E-2 | 2.91E-1 | -6.40E-1 | 1.25 |
| 2 | 0.00 | 8.00E-2 | 4.96E-2 | 8.60E-1 | 0.00 |
| 4 | 9.28E-1 | -2.37E-2 | 6.10E-1 | 2.27 | 0.00 |
| 5 | -3.43E-1 | 2.77E-1 | -2.90E-1 | 2.34 | -9.83E-1 |
| 6 | 0.00 | 4.50E-2 | 2.64E-2 | -4.93E-4 | -1.67E-3 |
| 7 | -3.52E+1 | -6.82E-2 | 4.44E-2 | -1.83E-2 | 3.77E-3 |

Under such conditions, $f_1/f_2$=0.84 was achieved, thereby satisfying the expression (1). L/FL=1.13 was achieved, thereby satisfying the expression (2). $f_1$/FL=0.97 was achieved, thereby satisfying the expression (3). $f_1/f_3$=-1.04 was achieved, thereby satisfying the expression (4). $d_2$/FL=0.15 was achieved, thereby satisfying the expression (5). $d_3$/FL=0.12 was achieved, thereby satisfying the expression (6). $d_4$/FL=0.15 was achieved, thereby satisfying the expression (7).

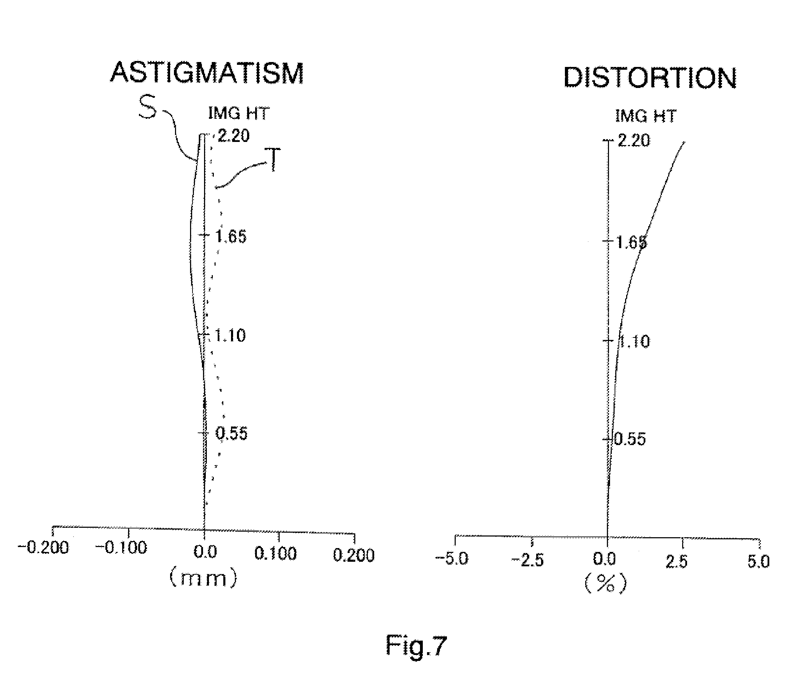

FIG. 7 shows the astigmatism and the distortion in the imaging lens 1 of the THIRD EXAMPLE.
According to the result, each of the astigmatism and the distortion was satisfied. It can be seen from the result that a sufficiently excellent optical property can be obtained.

FOURTH EXAMPLE

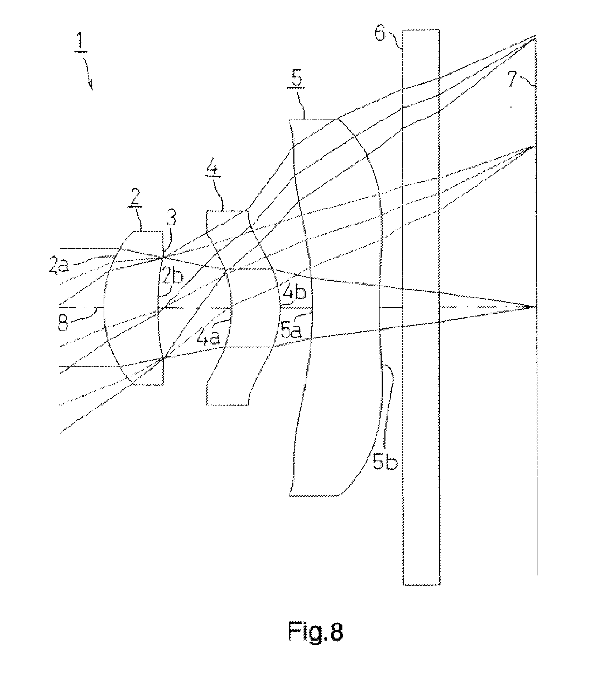

FIG. 8 shows a FOURTH EXAMPLE of the present invention. In this example as well, a cover glass serving as the filter 6 is disposed between the second face 5b of the third lens 5 and the image-taking surface 7.
The imaging lens 1 of the FOURTH EXAMPLE was set under the following conditions:
Lens Data
F no=3.25, $\omega$=35.05°, L=3.59mm, FL=3. 18mm, $f_1$=2.87mm, $f_2$=3.90mm, $f_3$=-3.26mm

| Face Number (Object Point) | r | d | nd | νd |
|---|---|---|---|---|
| 1(First Face of First Lens) | 1.00 | 0.45 | 1.5310 | 56.0 |

(continued)

| Face Number (Object Point) | r | d | nd | νd |
|---|---|---|---|---|
| 2(Second Face of First Lens) | 2.44 | 0.05 | | |
| 3(Diaphragm) | 0.00 | 0.57 | | |
| 4(First Face of Second Lens) | -1.00 | 0.40 | 1.5310 | 56.0 |
| 5(Second Face of Second Lens) | -0.77 | 0.27 | | |
| 6(First Face of Third Lens) | -3.28 | 0.55 | 1.5310 | 56.0 |
| 7(Second Face of Third Lens) | 3.92 | 0.10 | | |
| 8(First Face of Cover Glass) | 0.00 | 0.30 | 1.5168 | 64.2 |
| 9(Second Face of Cover Glass) (Image Surface) | 0.00 | | | |

| Face Number | k | A | B | C | D |
|---|---|---|---|---|---|
| 1 | -7.61E-1 | 1.00E-1 | 4.61E-1 | -1.12 | 2.13 |
| 2 | 0.00 | 1.27E-1 | 8.74E-2 | 8.36E-1 | 0.00 |
| 4 | 9.87E-1 | -4.52E-4 | 8.03E-1 | 6.70E-1 | 0.00 |
| 5 | -4.40E-1 | 3.17E-1 | -2.30E-1 | 1.98 | -1.41 |
| 6 | 0.00 | 3.86E-3 | 1.94E-2 | 9.71E-3 | -5.13E-3 |
| 7 | -7.07E+1 | -1.05E-1 | 3.48E-2 | -1.34E-2 | 1.69E-3 |

Under such conditions, $f_1/f_2$=0.74 was achieved, thereby satisfying the expression (1). L/FL=1.13 was achieved, thereby satisfying the expression (2). $f_1$/FL=0.90 was achieved, thereby satisfying the expression (3). $f_1/f_3$=-0.88 was achieved, thereby satisfying the expression (4). $d_2$/FL=0.20 was achieved, thereby satisfying the expression (5). $d_3$/FL=0.13 was achieved, thereby satisfying the expression (6). $d_4$/FL=0.09 was achieved, thereby satisfying the expression (7).

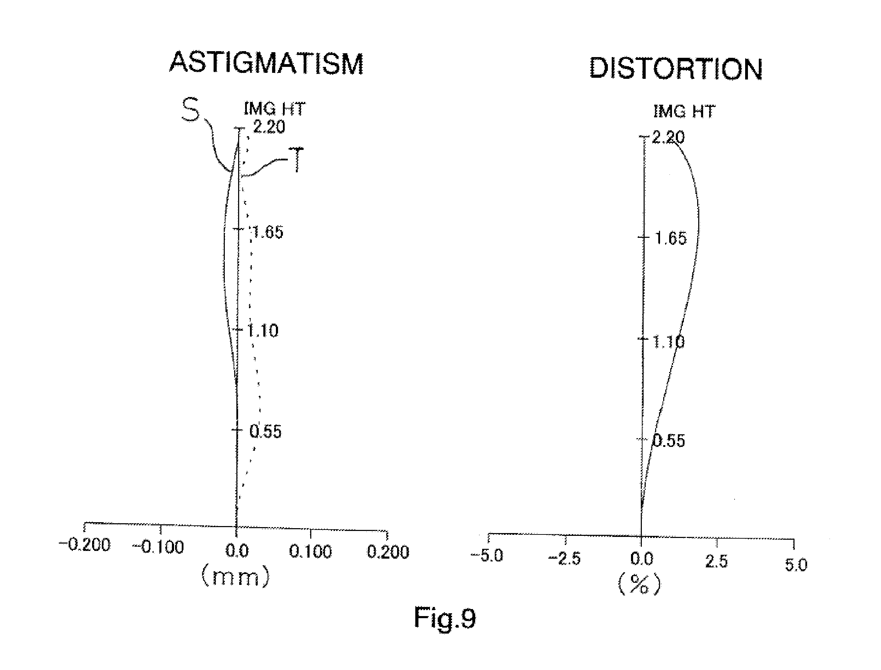

FIG. 9 shows the astigmatism and the distortion in the imaging lens 1 of the FOURTH EXAMPLE.

According to the result, each of the astigmatism and the distortion was satisfied. It can be seen from the result that a sufficiently excellent optical property can be obtained.

FIFTH EXAMPLE

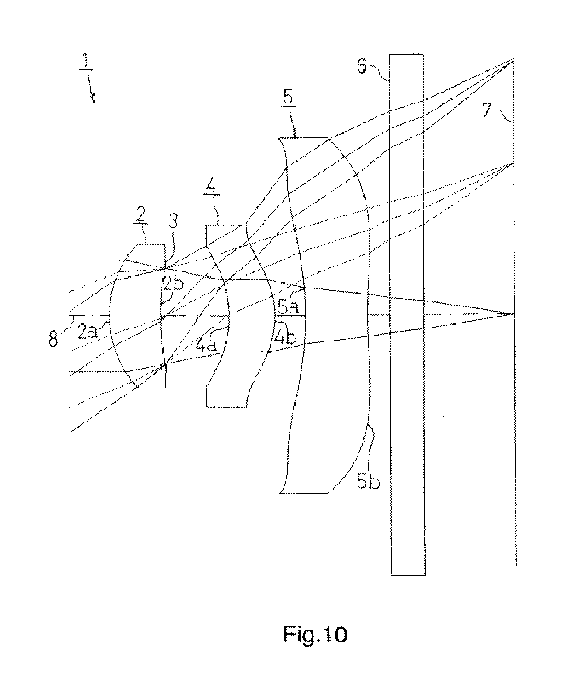

FIG. 10 shows a FIFTH EXAMPLE of the present invention. In this example as well, a cover glass serving as the filter 6 is disposed between the second face 5b of the third lens 5 and the image-taking surface 7.

The imaging lens 1 of the FIFTH EXAMPLE was set under the following conditions:

Lens Data

F no=3.25, ω=34.67°, L=3.59mm, FL=3.21mm, $f_1$=2.83mm, $f_2$=4.04mm, $f_3$=-3.20mm

| Face Number (Object Point) | r | d | nd | νd |
|---|---|---|---|---|
| 1(First Face of First Lens) | 1.00 | 0.45 | 1.5310 | 56.0 |
| 2(Second Face of First Lens) | 2.50 | 0.05 | | |
| 3(Diaphragm) | 0.00 | 0.57 | | |
| 4(First Face of Second Lens) | -1.00 | 0.40 | 1.5310 | 56.0 |
| 5(Second Face of Second Lens) | -0.78 | 0.27 | | |
| 6(First Face of Third Lens) | -3.23 | 0.55 | 1.5310 | 56.0 |
| 7(Second Face of Third Lens) | 3.85 | 0.10 | | |
| 8(First Face of Cover Glass) | 0.00 | 0.30 | 1.5168 | 64.2 |
| 9(Second Face of Cover Glass) (Image Surface) | 0.00 | | | |

| Face Number | k | A | B | C | D |
|---|---|---|---|---|---|
| 1 | -7.66E-1 | 9.93E-2 | 4.54E-1 | -1.10 | 2.07 |
| 2 | 0.00 | 1.25E-1 | 6.63E-2 | 8.23E-1 | 0.00 |
| 4 | 1.02 | 3.77E-2 | 7.70E-1 | 7.16E-1 | 0.00 |
| 5 | -4.32E-1 | 3.30E-1 | -2.13E-1 | 1.98 | -1.45 |
| 6 | 0.00 | -1.32E-2 | 3.24E-2 | 1.00E-2 | -6.54E-3 |
| 7 | -6.90E+1 | -1.14E-1 | 4.12E-2 | -1.61E-2 | 2.12E-3 |

Under such conditions, $f_1/f_2$=0.70 was achieved, thereby satisfying the expression (1). L/FL=1.12 was achieved, thereby satisfying the expression (2). $f_1$/FL=0. 88 was achieved, thereby satisfying the expression (3). $f_1/f_3$=-0.88 was achieved, thereby satisfying the expression (4). $d_2$/FL=0.19 was achieved, thereby satisfying the expression (5). $d_3$/FL=0.13 was achieved, thereby satisfying the expression (6). $d_4$/FL=0.08 was achieved, thereby satisfying the expression (7).

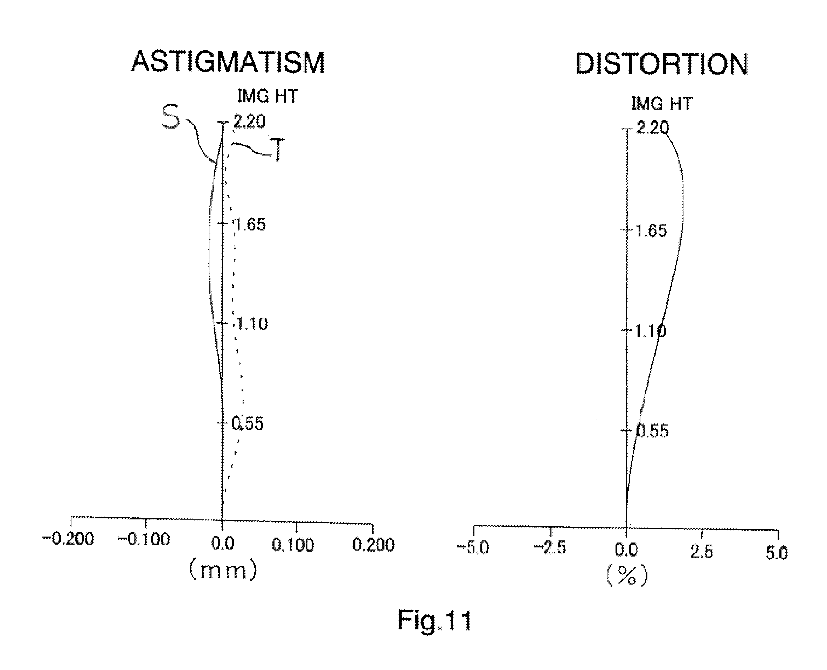

FIG. 11 shows the astigmatism and the distortion in the imaging lens 1 of the FIFTH EXAMPLE.

According to the result, each of the astigmatism and the distortion was satisfied. It can be seen from the result that a sufficiently excellent optical property can be obtained.

SIXTH EXAMPLE

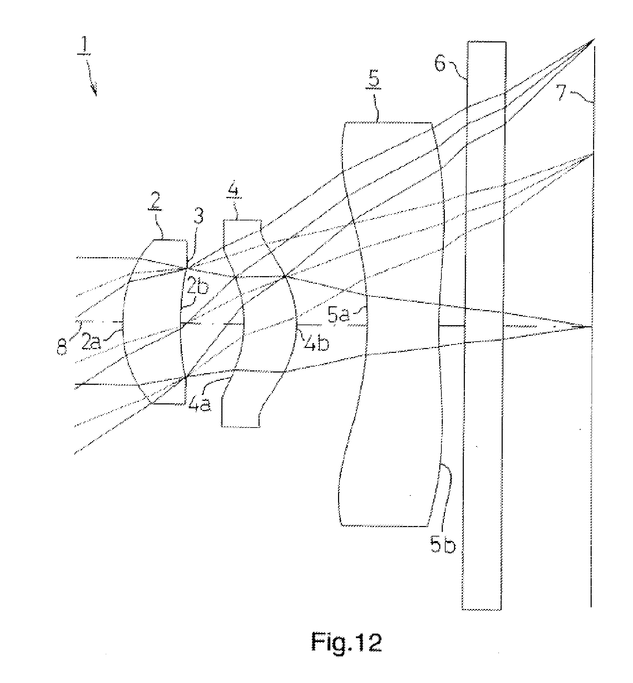

FIG. 12 shows a SIXTH EXAMPLE of the present invention. In this example as well, a cover glass serving as the filter 6 is disposed between the second face 5b of the third lens 5 and the image-taking surface 7.

The imaging lens 1 of the SIXTH EXAMPLE was set under the following conditions:

Lens Data

F no=3.25, $\omega$=34.35°, L=3.64mm, FL=3.19mm, $f_1$=3.16mm, $f_2$=3.77mm, $f_3$=-3.04mm

| Face Number | r | d | nd | νd |
|---|---|---|---|---|
| (Object Point) | | | | |
| 1(First Face of First Lens) | 1.07 | 0.45 | 1.5310 | 56.0 |
| 2(Second Face of First Lens) | 2.50 | 0.05 | | |
| 3(Diaphragm) | 0.00 | 0.45 | | |
| 4(First Face of Second Lens) | -1.00 | 0.40 | 1.5310 | 56.0 |
| 5 (Second Face of Second Lens) | -0.76 | 0.55 | | |
| 6(First Face of Third Lens) | -3.08 | 0.55 | 1.5310 | 56.0 |
| 7(Second Face of Third Lens) | 3.64 | 0.10 | | |
| 8(First Face of Cover Glass) | 0.00 | 0.30 | 1.5168 | 64.2 |
| 9 (Second Face of Cover Glass) | 0.00 | | | |
| (Image Surface) | | | | |

| Face Number | k | A | B | C | D |
|---|---|---|---|---|---|
| 1 | 1.56E-1 | 7.19E-3 | 3.42E-1 | -9.66E-1 | 2.03 |
| 2 | 0.00 | 1.49E-1 | 6.03E-2 | 1.71 | 0.00 |
| 4 | 8.22E-1 | 3.21E-2 | 4.77E-1 | 2.50 | 0.00 |
| 5 | -2.67E-1 | 2.55E-1 | -3.89E-1 | 2.29 | -6.50E-1 |
| 6 | 0.00 | -5.27E-2 | 7.72E-2 | -2.18E-2 | 2.32E-3 |
| 7 | -4.03E+1 | -9.66E-2 | 4.53E-2 | -1.33E-2 | 1.70E-3 |

Under such conditions, $f_1/f_2$=0.84 was achieved, thereby satisfying the expression (1). L/FL=1.14 was achieved, thereby satisfying the expression (2). $f_1$/FL=0.99 was achieved, thereby satisfying the expression (3). $f_1/f_3$=-1.04 was achieved, thereby satisfying the expression (4). $d_2$/FL=0.16 was achieved, thereby satisfying the expression (5). $d_3$/FL=0.13 was achieved, thereby satisfying the expression (6). $d_4$/FL=0.17 was achieved, thereby satisfying the expression (7).

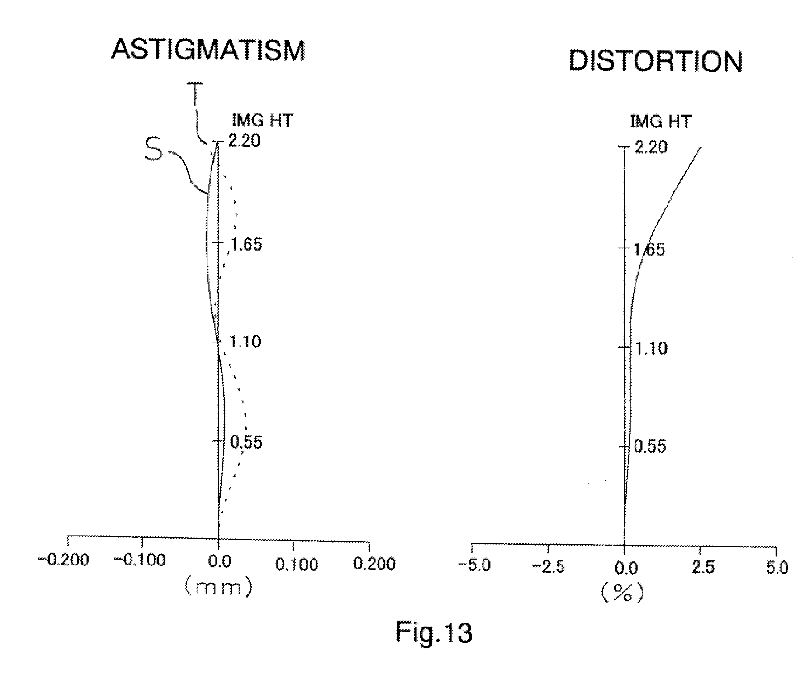

FIG. 13 shows the astigmatism and the distortion in the imaging lens 1 of the SIXTH EXAMPLE.

According to the result, each of the astigmatism and the distortion was satisfied. It can be seen from the result that a sufficiently excellent optical property can be obtained.

SEVENTH EXAMPLE

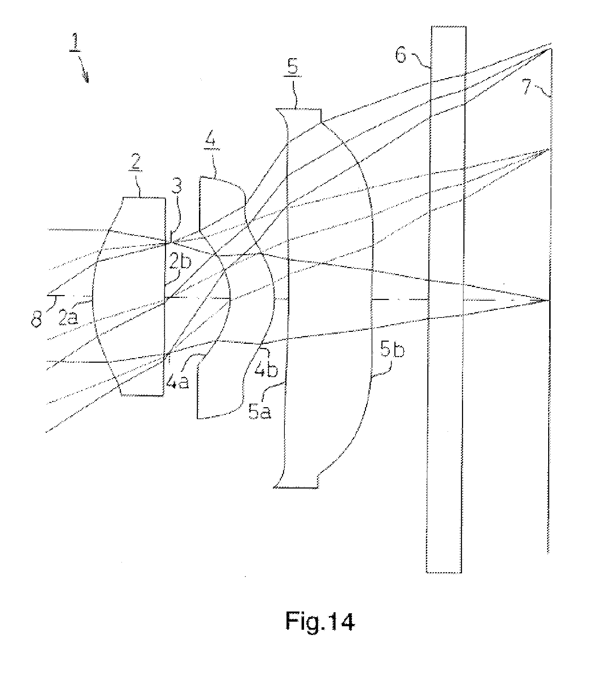

FIG. 14 shows a SEVENTH EXAMPLE of the present invention. In this example as well, a cover glass serving as the filter 6 is disposed between the second face 5b of the third lens 5 and the image-taking surface 7.

The imaging lens 1 of the SEVENTH EXAMPLE was set under the following conditions:

Lens Data

F no=2.85, $\omega$=34.10°, L=3.65mm, FL=3.29mm, $f_1$=2.61mm, $f_2$=7.04mm, $f_3$=-5.95mm

| Face Number | r | d | nd | vd |
|---|---|---|---|---|
| (Object Point) | | | | |
| 1(First Face of First Lens) | 1.25 | 0.63 | 1.5310 | 56.0 |
| 2(Second Face of First Lens) | 10.00 | 0.05 | | |
| 3(Diaphragm) | 0.00 | 0.53 | | |
| 4(First Face of Second Lens) | -0.63 | 0.39 | 1.5850 | 30.0 |
| 5 (Second Face of Second Lens) | -0.69 | 0.12 | | |
| 6(First Face of Third Lens) | -9.52 | 0.72 | 1.5310 | 56.0 |
| 7(Second Face of Third Lens) | 4.88 | 0.50 | | |
| 8(First Face of Cover Glass) | 0.00 | 0.30 | 1.5168 | 64.2 |
| 9(Second Face of Cover Glass) | 0.00 | | | |
| (Image Surface) | | | | |

| Face Number | k | A | B | C | D |
|---|---|---|---|---|---|
| 1 | -6.58E-1 | 1.84E-2 | -3.69E-2 | 9.81E-2 | -3.35E-1 |
| 2 | 0.00 | -8.84E-2 | -2.91E-1 | 1.01E-1 | 0.00 |
| 4 | -1.86E-1 | 1.52E-1 | 1.70 | 3.76E-1 | 0.00 |
| 5 | -8.25E-1 | 3.14E-1 | 8.69E-2 | 1.40 | -1.30 |
| 6 | 0.00 | 7.25E-2 | -7.80E-2 | 4.33E-2 | -8.53E-3 |
| 7 | -2.11E+2 | -1.43E-1 | 7.06E-2 | -2.99E-2 | 4.15E-3 |

Under such conditions, $f_1/f_2$=0.37 was achieved, thereby satisfying the expression (1). L/FL=1.11 was achieved, thereby satisfying the expression (2). $f_1$/FL=0.80 was achieved, thereby satisfying the expression (3). $f_1/f_3$=-0.44 was achieved, thereby satisfying the expression (4). $d_2$/FL=0.18 was achieved, thereby satisfying the expression (5). $d_3$/FL=0.12 was achieved, thereby satisfying the expression (6). $d_4$/FL=0.04 was achieved, thereby satisfying the expression (7).

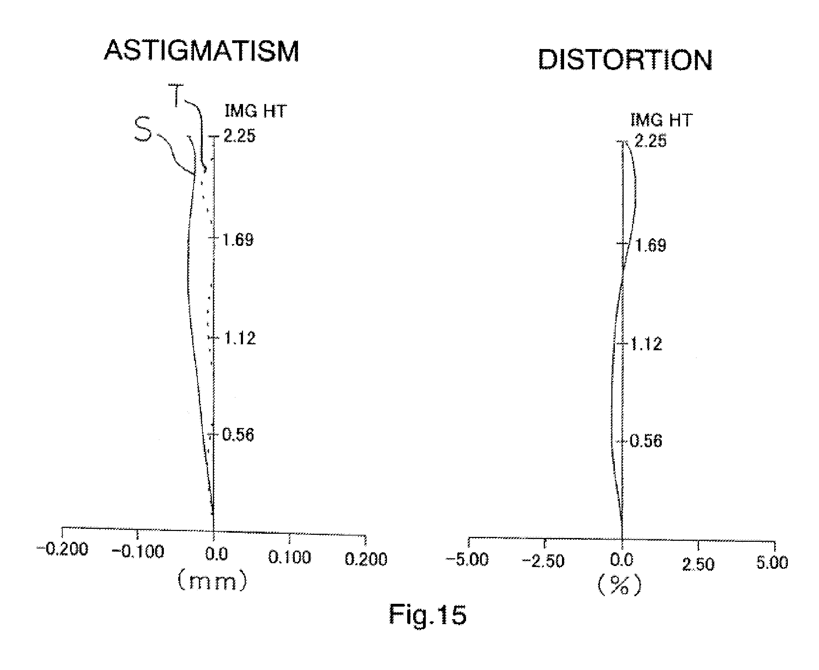

FIG. 15 shows the astigmatism and the distortion in the imaging lens 1 of the SEVENTH EXAMPLE.

According to the result, each of the astigmatism and the distortion was satisfied. It can be seen from the result that a sufficiently excellent optical property can be obtained.

EIGHTH EXAMPLE

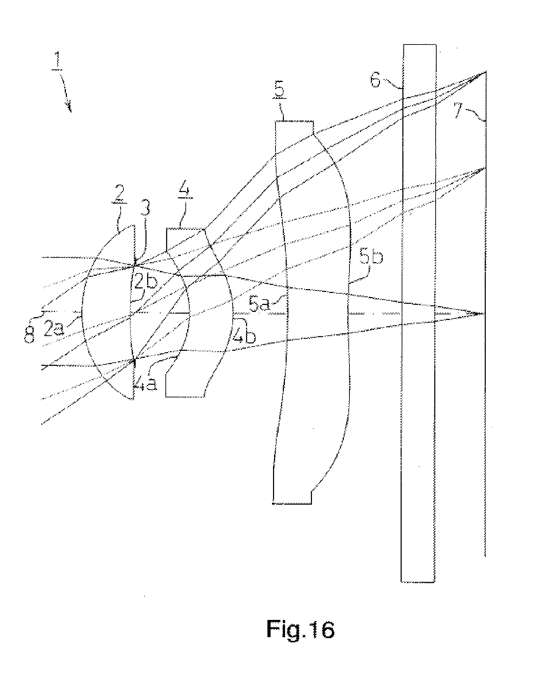

FIG. 16 shows an EIGHTH EXAMPLE of the present invention. In this example as well, a cover glass serving as the filter 6 is disposed between the second face 5b of the third lens 5 and the image-taking surface 7.

The imaging lens 1 of the EIGHTH EXAMPLE was set under the following conditions:

Lens Data

F no=3.25, $\omega$=34.59°, L=3.45mm, FL=3.25mm, $f_1$=2.75mm, $f_2$=8.06mm, $f_3$=-5.46mm

| Face Number | r | d | nd | νd |
|---|---|---|---|---|
| (Object Point) | | | | |
| 1(First Face of First Lens) | 1.04 | 0.45 | 1.5310 | 56.0 |
| 2(Second Face of First Lens) | 2.99 | 0.05 | | |
| 3(Diaphragm) | 0.00 | 0.50 | | |
| 4(First Face of Second Lens) | -0.79 | 0.40 | 1.5310 | 56.0 |
| 5(Second Face of Second Lens) | -0.79 | 0.50 | | |
| 6(First Face of Third Lens) | -0.79 | 0.55 | 1.5310 | 56.0 |
| 7(Second Face of Third Lens) | 4.72 | 0.50 | | |
| 8(First Face of Cover Glass) | 0.00 | 0.30 | 1.5168 | 64.2 |
| 9(Second Face of Cover Glass) | 0.00 | | | |
| (Image Surface) | | | | |

| Face Number | k | A | B | C | D |
|---|---|---|---|---|---|
| 1 | -8.06E-1 | 1.05E-1 | 2.33E-1 | -3.19E-1 | 6.07E-1 |
| 2 | 0.00 | 5.82E-2 | -3.04E-3 | 1.02E-1 | 0.00 |
| 4 | 4.82E-1 | 1.37E-1 | 6.68E-1 | 1.83 | 0.00 |
| 5 | -3.61E-1 | 2.93E-1 | -2.01E-1 | 1.90 | -1.29 |
| 6 | 0.00 | -7.95E-3 | -6.65E-3 | 9.90E-3 | -1.97E-3 |
| 7 | -8.70E+1 | -7.52E-2 | 1.55E-2 | -6.79E-3 | 1.12E-3 |

Under such conditions, $f_1/f_2$=0.34 was achieved, thereby satisfying the expression (1). L/FL=1.06 was achieved, thereby satisfying the expression (2). $f_1$/FL=0.85 was achieved, thereby satisfying the expression (3). $f_1/f_3$=-0.50 was achieved, thereby satisfying the expression (4). $d_2$/FL=0.17 was achieved, thereby satisfying the expression (5). $d_3$/FL=0.12 was achieved, thereby satisfying the expression (6). $d_4$/FL=0.15 was achieved, thereby satisfying the expression (7).

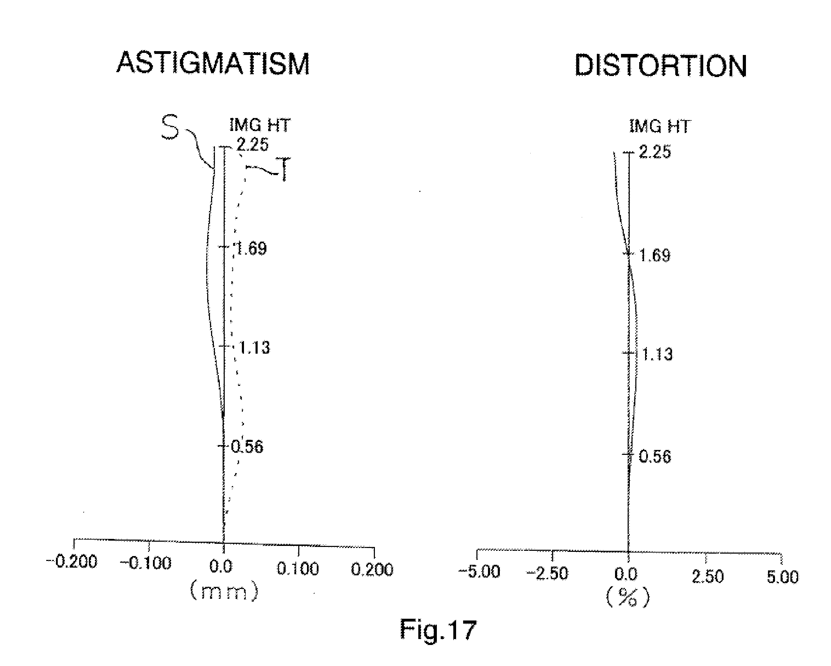

FIG. 17 shows the astigmatism and the distortion in the imaging lens 1 of the EIGHTH EXAMPLE.

According to the result, each of the astigmatism and the distortion was satisfied. It can be seen from the result that a sufficiently excellent optical property can be obtained.

NINTH EXAMPLE

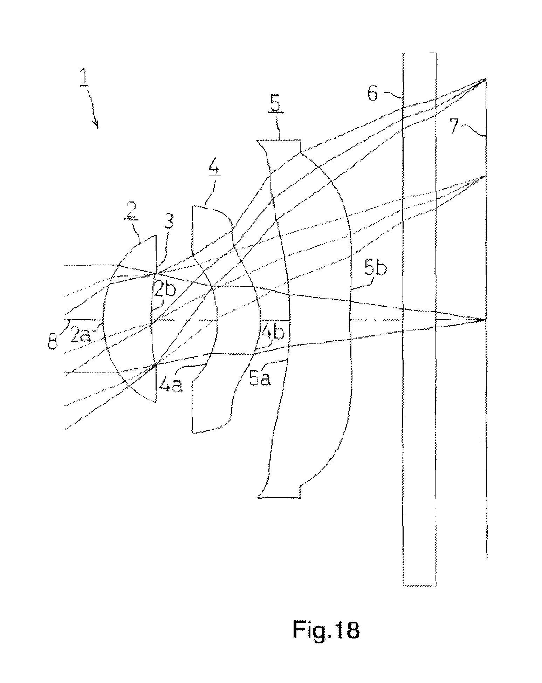

FIG. 18 shows a NINTH EXAMPLE of the present invention. In this example as well, a cover glass serving as the filter 6 is disposed between the second face 5b of the third lens 5 and the image-taking surface 7.

The imaging lens 1 of the NINTH EXAMPLE was set under the following conditions:

Lens Data

F no=3.25, ω=34.37°, L=3.51mm, FL=3.25mm, $f_1$=2.64mm, $f_2$=4.82mm, $f_3$=-3.29mm

| Face Number | r | d | nd | νd |
|---|---|---|---|---|
| (Object Point) | | | | |
| 1(First Face of First Lens) | 0.96 | 0.46 | 1.5310 | 56.0 |
| 2(Second Face of First Lens) | 2.54 | 0.05 | | |
| 3(Diaphragm) | 0.00 | 0.57 | | |
| 4(First Face of Second Lens) | -0.85 | 0.40 | 1.5310 | 56.0 |
| 5(Second Face of Second Lens) | -0.74 | 0.27 | | |
| 6(First Face of Third Lens) | -3.31 | 0.55 | 1.5310 | 56.0 |
| 7(Second Face of Third Lens) | 3.95 | 0.50 | | |
| 8(First Face of Cover Glass) | 0.00 | 0.30 | 1.5168 | 64.2 |
| 9(Second Face of Cover Glass) | 0.00 | | | |
| (Image Surface) | | | | |

| Face Number | k | A | B | C | D |
|---|---|---|---|---|---|
| 1 | -7.75E-1 | 9.74E-2 | 4.92E-1 | -1.13 | 1.93 |
| 2 | 0.00 | 1.14E-1 | -6.98E-2 | 7.56E-1 | 0.00 |
| 4 | 7.00E-1 | 1.23E-1 | 4.49E-1 | 1.45 | 0.00 |
| 5 | -5.55E-1 | 3.64E-1 | -2.87E-1 | 1.83 | -1.33 |
| 6 | 0.00 | 2.42E-3 | 9.25E-3 | 1.18E-2 | -4.62E-3 |
| 7 | -1.31E+2 | -1.18E-1 | 3.30E-2 | -1.06E-2 | 5.49E-4 |

Under such conditions, $f_1/f_2$=0.55 was achieved, thereby satisfying the expression (1). L/FL=1.08 was achieved, thereby satisfying the expression (2). $f_1$/FL=0.81 was achieved, thereby satisfying the expression (3). $f_1/f_3$=-0.80 was achieved, thereby satisfying the expression (4). $d_2$/FL=0.19 was achieved, thereby satisfying the expression (5). $d_3$/FL=0.12 was achieved, thereby satisfying the expression (6). $d_4$/FL=0.08 was achieved, thereby satisfying the expression (7).

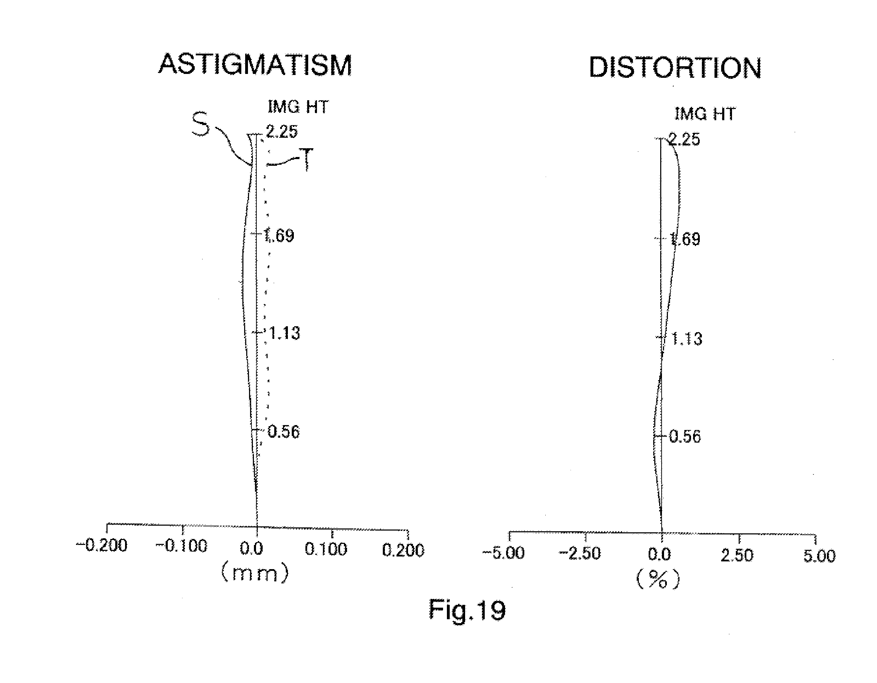

FIG. 19 shows the astigmatism and the distortion in the imaging lens 1 of the NINTH EXAMPLE.

According to the result, each of the astigmatism and the distortion was satisfied. It can be seen from the result that a sufficiently excellent optical property can be obtained.

TENTH EXAMPLE

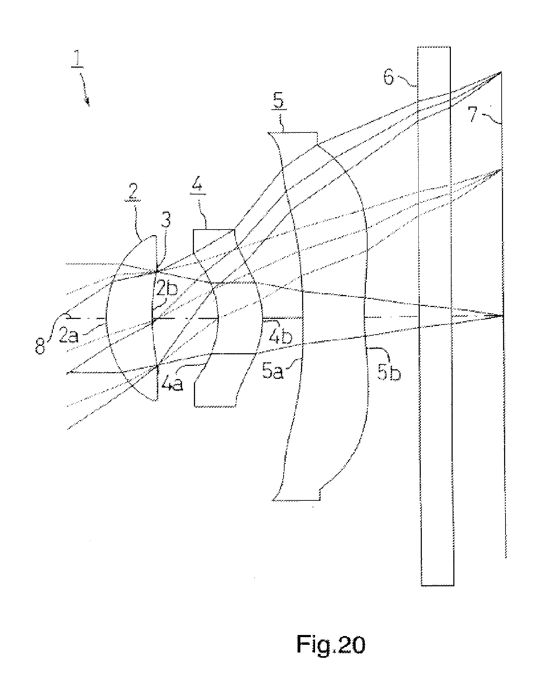

FIG. 20 shows a TENTH EXAMPLE of the present invention. In this example as well, a cover glass serving as the filter 6 is disposed between the second face 5b of the third lens 5 and the image-taking surface 7.

The imaging lens 1 of the TENTH EXAMPLE was set under the following conditions:

Lens Data

F no=3.25, $\omega$=34.36°, L=3.84mm, FL=3.25mm, $f_1$=2.69mm, $f_2$=7.54mm, $f_3$=-4.46mm

| Face Number | r | d | nd | νd |
|---|---|---|---|---|
| (Object Point) | | | | |
| 1(First Face of First Lens) | 1.00 | 0.42 | 1.5310 | 56.0 |
| 2(Second Face of First Lens) | 2.79 | 0.05 | | |
| 3(Diaphragm) | 0.00 | 0.56 | | |
| 4(First Face of Second Lens) | -0.87 | 0.40 | 1.5310 | 56.0 |
| 5 (Second Face of Second Lens) | -0.83 | 0.37 | | |
| 6(First Face of Third Lens) | -10.02 | 0.55 | 1.5310 | 56.0 |
| 7(Second Face of Third Lens) | 3.18 | 0.50 | | |
| 8(First Face of Cover Glass) | 0.00 | 0.30 | 1.5168 | 64.2 |
| 9(Second Face of Cover Glass) | 0.00 | | | |
| (Image Surface) | | | | |

| Face Number | k | A | B | C | D |
|---|---|---|---|---|---|
| 1 | -6.94E-1 | 9.17E-2 | 4.38E-1 | -1.02 | 1.90 |
| 2 | 0.00 | 1.03E-1 | -1.55E-2 | 6.26E-1 | 0.00 |
| 4 | 6.91E-1 | 1.64E-1 | 4.38E-1 | 1.63 | 0.00 |
| 5 | -3.84E-1 | 3.05E-1 | -3.40E-1 | 2.05 | -1.44 |
| 6 | 0.00 | -1.04E-1 | 4.06E-2 | 1.02E-2 | -4.87E-3 |
| 7 | -5.55E+1 | -1.09E-1 | 2.21E-2 | -7.51E-3 | 6.99E-4 |

Under such conditions, $f_1/f_2$=0.36 was achieved, thereby satisfying the expression (1). L/FL=1.18 was achieved, thereby satisfying the expression (2). $f_1$/FL=0.82 was achieved, thereby satisfying the expression (3). $f_1/f_3$=-0.60 was achieved, thereby satisfying the expression (4). $d_2$/FL=0.19 was achieved, thereby satisfying the expression (5). $d_3$/FL=0.12 was achieved, thereby satisfying the expression (6). $d_4$/FL=0.11 was achieved, thereby satisfying the expression (7).

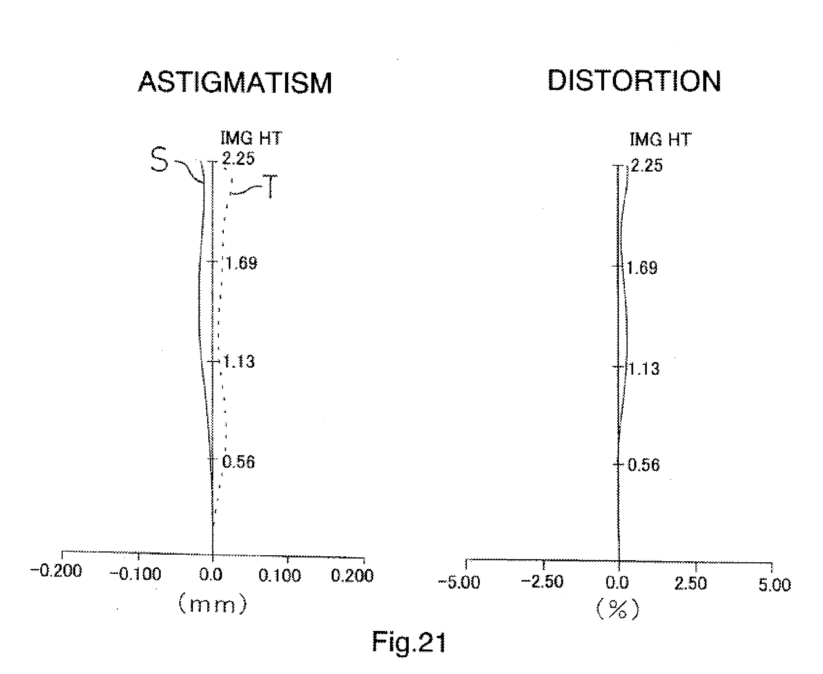

FIG. 21 shows the astigmatism and the distortion in the imaging lens 1 of the TENTH EXAMPLE.

According to the result, each of the astigmatism and the distortion was satisfied. It can be seen from the result that a sufficiently excellent optical property can be obtained.

The present invention is not limited to the above-described embodiment. Various modifications can be made as required. For example, a light-transmitting material other than resin material can be suitably used as the material for the first lens, the second lens, and the third lens.

**Claims**

1. An imaging lens used for forming an image of an object on an image-taking surface of an image sensor element, comprising:

   in order from an object side to an image surface side, a first lens that is a meniscus lens having a positive power whose convex surface faces the object side, a diaphragm, a second lens that is a meniscus lens having a positive power whose convex surface faces the image surface side, and a third lens that is a biconcave lens having a negative power, wherein a condition expressed by the following expression (1) is to be satisfied:

$$0.3 \leq f_1/f_2 \leq 0.86 \qquad (1)$$

   where,

   $f_1$: focal distance of the first lens
   $f_2$: focal distance of the second lens.

2. An imaging lens according to claim 1, wherein:

   a condition expressed by a following expression (2) is to be further satisfied:

$$1 \leq L/FL \leq 1.3 \qquad (2)$$

   where,

   L: overall length of the lens system (distance from a surface of the first lens on the object side to the image-taking surface on an optical axis [equivalent air length])
   FL: focal distance of the entire lens system.

3. An imaging lens according claim 1 or 2, wherein:

   a condition expressed by a following expression (3) is to be further satisfied:

$$0.6 \leq f_1/FL \leq 1.0 \qquad (3)$$

   where,

   FL: focal distance of the entire lens system.

4. An imaging lens according to any one of claims 1 to 3, wherein:

   a condition expressed by a following expression (4) is to be further satisfied:

$$-1.1 \le f_1/f_3 \le -0.1 \qquad (4)$$

where,

$f_3$: focal distance of the third lens.

**5.** An imaging lens according to any one of claims 1 to 4, wherein:

a condition expressed by a following expression (5) is to be further satisfied:

$$0.12 \le d_2/FL \le 0.2 \qquad (5)$$

where,

$d_2$: distance between the first lens and the second lens on the optical axis
FL: focal distance of the entire lens system.

**6.** An imaging lens according to any one of claims 1 to 5, wherein:

a condition expressed by a following expression (6) is to be further satisfied:

$$0.01 \le d_3/FL \le 0.2 \qquad (6)$$

where,

$d_3$: center thickness of the second lens
FL: focal distance of the entire lens system.

**7.** An imaging lens according to any one of claims 1 to 6, wherein:

a condition expressed by a following expression (7) is to be further satisfied:

$$0 < d_4/FL \le 0.25 \qquad (7)$$

where,

$d_4$: distance between the second lens and the third lens on the optical axis
FL: focal distance of the entire lens system.

**8.** An imaging device comprising the imaging lens according to any one of claims 1 to 7 and an image sensor element.

Fig.1

Fig.2

ASTIGMATISM

DISTORTION

Fig.3

EP 1 965 238 A1

EP 1 965 238 A1

Fig.4

21

Fig.5

EP 1 965 238 A1

Fig.6

## ASTIGMATISM

S

IMG HT

T

2.20

1.65

1.10

0.55

-0.200    -0.100    0.0    0.100    0.200
(mm)

## DISTORTION

IMG HT

2.20

1.65

1.10

0.55

-5.0    -2.5    0.0    2.5    5.0
(%)

Fig.7

EP 1 965 238 A1

Fig.8

EP 1 965 238 A1

ASTIGMATISM

DISTORTION

S

IMG HT
2.20

T

1.65

1.10

0.55

-0.200    -0.100    0.0    0.100    0.200
(mm)

IMG HT
2.20

1.65

1.10

0.55

-5.0    -2.5    0.0    2.5    5.0
(%)

Fig.9

Fig.10

DISTORTION

ASTIGMATISM

Fig.11

Fig.12

ASTIGMATISM

DISTORTION

Fig.13

EP 1 965 238 A1

Fig.14

ASTIGMATISM

DISTORTION

Fig.15

EP 1 965 238 A1

Fig.16

EP 1 965 238 A1

Fig.17

Fig.18

EP 1 965 238 A1

ASTIGMATISM

DISTORTION

Fig.19

Fig.20

# ASTIGMATISM

IMG HT

S

T

2.25

1.69

1.13

0.56

-0.200    -0.100    0.0    0.100    0.200

(mm)

# DISTORTION

IMG HT

2.25

1.69

1.13

0.56

-5.00    -2.50    0.0    2.50    5.00

(%)

Fig.21

EP 1 965 238 A1

**European Patent Office**

**EUROPEAN SEARCH REPORT**

Application Number

EP 08 15 1966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 1 914 580 A (ENPLAS CORP [JP]) 23 April 2008 (2008-04-23) * paragraph [0012] - paragraph [0025] * ----- | 1-8 | INV. G02B9/12 G02B13/02 |
| E | EP 1 914 581 A (ENPLAS CORP [JP]) 23 April 2008 (2008-04-23) * paragraph [0012] - paragraph [0025] * ----- | 1-8 | |
| | | | TECHNICAL FIELDS SEARCHED (IPC) |
| | | | G02B |

The present search report has been drawn up for all claims

| Place of search | Date of completion of the search | Examiner |
|---|---|---|
| Berlin | 13 June 2008 | Jacobs, Adam |

EPO FORM 1503 03.82 (P04C01)

**ANNEX TO THE EUROPEAN SEARCH REPORT
ON EUROPEAN PATENT APPLICATION NO.**

EP 08 15 1966

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2008

| Patent document cited in search report | | Publication date | Patent family member(s) | | Publication date |
|---|---|---|---|---|---|
| EP 1914580 | A | 23-04-2008 | US | 2008094733 A1 | 24-04-2008 |
| EP 1914581 | A | 23-04-2008 | CN | 101165531 A | 23-04-2008 |
| | | | JP | 2008102237 A | 01-05-2008 |
| | | | US | 2008094732 A1 | 24-04-2008 |

EPO FORM P0459

For more details about this annex : see Official Journal of the European Patent Office, No. 12/82

**EP 1 965 238 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005173298 A
- JP 2005091513 A
- JP 2003322792 A
- JP 2004163786 A